# EUROPÄISCHE PATENTSCHRIFT

(11) **EP 1 620 266 B1**
(45) Veröffentlichungstag und Bekanntmachung des Hinweises auf die Patenterteilung: **29.04.2009**
(21) Anmeldenummer: 04730551.1
(22) Anmeldetag: 30.04.2004
(51) Int. Cl.: B41F 33/00

(54) **VERFAHREN ZUR VERWENDUNG EINER VORRICHTUNGEN ZUR REGELUNG MINDESTENS EINES REGISTERS IN EINER DRUCKMASCHINE**
PROCESS FOR USING DEVICES FOR CONTROLLING AT LEAST ONE REGISTER IN A PRINTING MACHINE
PROCÉDÉ D'UTILISATION DE DISPOSITIFS POUR R GLER AU MOINS UN REGISTRE D'UNE PRESSE

(30) Priorität: 02.05.2003 DE 10319770
(43) Veröffentlichungstag der Anmeldung: 01.02.2006
(73) Patentinhaber: Koenig & Bauer Aktiengesellschaft, 97080 Würzburg (DE)
(72) Erfinder: BUDACH, Stefan, Arthur, 32758 Detmold (DE); LOHWEG, Volker, 33699 Bielefeld (DE); STÖBER, Bernd, Rüdiger, 33378 Rheda-Wiedenbrück (DE); WILLEKE, Harald, Heinrich, 33102 Paderborn (DE)
(86) Internationale Anmeldenummer: PCT/EP2004/050658
(87) Internationale Veröffentlichungsnummer: WO 2004/096546

(56) Entgegenhaltungen:
- EP-A- 1 384 580
- WO-A-95/31333
- US-A- 5 724 437
- US-A- 6 050 192
- US-B1- 6 332 397

## Beschreibung

Die Erfindung betrifft ein Verfahren zur Verwendung einer Vorrichtung zur Regelung mindestens eines Registers in einer Druckmaschine gemäß dem Oberbegriff des Anspruchs 1.

Der WO 95/31333 A1 ist ein Verfahren zur Verwendung einer Vorrichtung zur Regelung mindestens eines Registers in einer Druckmaschine mit mindestens einem Druckwerk mit zumindest einem Formzylinder, einem Übertragungszylinder und einem Gegendruckzylinder entnehmbar, wobei ein Bildsensor von einem im Druckwerk mit Farbe bedruckten Druckträger ein Bild aufnimmt und das Bild in einer Auswerteeinheit auswertet, wobei die Auswerteeinheit einen Stellbefehl an einen Stellantrieb zur Regelung des Registers aus einem Vergleich von Daten, die mit einem während einer laufenden Produktion der Druckmaschine aktuell aufgenommenen Bild korrelieren, mit Daten eines zuvor generierten Bildes generiert, wobei die Auswerteeinheit aus den Daten des aktuell aufgenommenen Bildes dessen Zerlegung in Farbseparationen vornimmt, wobei die Auswerteeinheit eine relative Positionsbestimmung einer aus den Daten des aktuell aufgenommenen Bildes vorgenommenen Farbseparation in Bezug auf eine aus den Daten des zuvor generierten Bildes vorgenommenen Referenzfarbseparation vornimmt, wobei die Daten des zuvor generierten Bildes mit einem in einer der Druckmaschine vorgeordneten Druckvorstufe erstellten Bild korrelieren.

Durch die US 6,050,192 A ist eine Vorrichtung zur Regelung mindestens eines Registers und einer Farbdichte in einer Druckmaschine mit mindestens einem Druckwerk mit zumindest einem Übertragungszylinder und einem Gegendruckzylinder bekannt, wobei ein Bildsensor von einem im Druckwerk mit Farbe bedruckten Druckträger ein Bild aufnimmt und mit dem Bild korrelierende Daten an eine Auswerteeinheit überträgt, wobei die Auswerteeinheit aus einem Vergleich der Daten eines während einer laufenden Produktion der Druckmaschine aktuell aufgenommenen Bildes mit Daten eines zuvor generierten Bildes einen Stellbefehl an einen Stellantrieb zur Regelung der Zufuhr der Farbe und einen Stellbefehl an einen Antrieb zur Regelung des Registers generiert, wobei die Auswerteeinheit aus den Daten des aktuell aufgenommenen Bildes dessen Zerlegung in Farbseparationen vornimmt. Zur Regelung des Registers werden Ist-Bildsignale von signifikanten Bildelementen ausgewertet und mit Soll-Bildsignalen verglichen. Der Antrieb zur Regelung des Registers bewirkt eine Korrektur des Registers sowohl hinsichtlich der Bildlage zu den Bedruckstoffkanten als auch hinsichtlich der einzelnen Farbbilder zueinander. Die Auswertung der Bildsignale und deren Vergleich mit einer Referenz ist darauf beschränkt, ein bestimmtes Druckexemplar als Ganzes oder zu demselben Druckexemplar gehörende Farbbilder zueinander anhand von signifikanten Bildelementen registerhaltig auszurichten.

Durch die DE 43 21 177 A1 ist eine Vorrichtung zur parallelen Bildinspektion und Farbregelung an einem in einer Druckmaschine mit mindestens einem Druckwerk erstellten Druckprodukt bekannt, wobei eine Bilddaten vom Druckprodukt an eine Recheneinrichtung liefernde Bilderfassungseinrichtung vorgesehen ist, wobei die Bilderfassungseinrichtung aus einem oder mehreren jeweils einen definierten Bildbereich des Druckproduktes abtastenden Messmodulen und aus zumindest einer zugeordneten, die Bilddaten erzeugenden und vorzugsweise von den Messmodulen räumlich getrennten Empfangseinrichtung besteht, wobei die Messmodule und die mindestens eine Empfangseinrichtung mittels mindestens eines Bildleiters miteinander verbunden sind, wobei zusätzlich ein Registersensor vorgesehen ist, mit dem eine Registermessung an dem bedruckten Druckprodukt durchgeführt wird.

Durch die EP 0 598 490 A1 ist ein Farbregistersystem für eine Druckmaschine bekannt, wobei ein Computer mit einer Kamera oder einer Gruppe von Kameras durch einen Vergleich eines aktuellen Bildes mit einem gespeicherten Referenzbild eine Fehlausrichtung von Farben eines Druckbildes bestimmt und mit einer Drucksteuerung eine Längs-, Quer- und Drehposition von Zylindern der Druckmaschine relativ zu einer durch die Druckmaschine bewegten, zu bedruckenden Bahn derart ausrichtet, dass diese ein Mehrfarbenbild mit zueinander richtig angeordneten Farben erzeugen.

Durch die EP 0 882 588 A1 sind eine Vorrichtung und ein Verfahren zur registerhaltigen Abstimmung von Druckzylindern einer Rollenrotationsmaschine bekannt, wobei ein auf eine Seite der Bahn druckender erster Zylinder von einem ersten Motor und ein auf die gleiche Seite der Bahn druckender zweiter Zylinder von einem zweiten Motor angetrieben werden und die Winkellage des zweiten Zylinders durch einen Regler registerhaltig zum ersten Zylinder abgestimmt wird, wobei von den Zylindern auf die Bahn mitgedruckte Passermarken mit einer hinter dem in Produktionsrichtung letzten Zylinder angeordneten Sensor, z. B. einer CCD-Kamera, aufgenommen und anhand von Kennlinien als Führungsgröße für den Regler ausgewertet werden.

Der Erfindung liegt die Aufgabe zugrunde, ein Verfahren zur Verwendung einer Vorrichtung zur Regelung mindestens eines Registers in einer Druckmaschine zu schaffen, welches schnelle Eingriffs- und Regelungsmöglichkeiten bietet.

Die Aufgabe wird erfindungsgemäß durch ein Verfahren mit den Merkmalen des Anspruchs 1 gelöst.

Die mit der Erfindung erzielbaren Vorteile bestehen insbesondere darin, dass für die verschiedenen Regelstrecken in der Druckmaschine nicht mehrere verschiedenartige Sensoren mit zugehörigen unterschiedlichen Auswerteeinheiten erforderlich sind, sondern allein der Bildsensor liefert für mehrere druckprozessrelevante, in Regelstrecken beeinflussbare Parameter in der Druckmaschine die erforderlichen Daten, wie z. B. für die Einstellung der Zufuhr der Farbe oder des Feuchtmittels, der Register oder Passer, was sich sowohl auf die Kosten zur Erstellung und Pflege des Regelsystems als auch auf die Reaktionsgeschwindigkeit bei festgestellten Regelabweichungen günstig auswirkt. Die vorgenannten druckprozessrelevanten Parameter können somit gleichzeitig von einer einzigen einen Bildsensor und nur eine Auswerteeinheit aufweisende Regeleinrichtung kontrolliert und im Bedarfsfall korrigiert werden, was infolge der schnellen Eingriffs- und Regelungsmöglichkeiten dazu beiträgt, im Druckprozess die Makulaturmenge gering zu halten und eine hohe Produktionsqualität über den gesamten Druckprozess zu gewährleisten. Durch die ganzheitliche Erfassung und Auswertung der Daten in einer einzigen Auswerteeinheit bzw. Rechenanlage werden ihre Protokollierung und eine damit einhergehende Dokumentation der Qualität der Druckerzeugnisse sowie statistische Analysen zum Druckprozess durch den Wegfall sonst zu lösender Schnittstellenprobleme erleichtert. Da vorzugsweise von jedem erstellten Druckexemplar ein Bild aufgenommen wird, erfolgt eine Einzelstückprüfung und nicht nur eine Stichprobenprüfung. Folglich ergibt sich im Druckprozess eine 100%-Prüfung, wobei qualitativ mangelhafte Druckexemplare ausgeschleust oder zumindest markiert werden können. Separate, zusätzlich zum eigentlichen Druckbild auf dem Druckträger aufgebrachte Registermarken, Prüffelder oder Druckkontrollstreifen sind zur Regelung der Farbdichte einer von der Druckmaschine auf dem Druckträger aufgebrachten Farbe oder zur Prüfung auf Registerhaltigkeit des Druckbildes nicht erforderlich, was vorteilhaft ist, denn zum einen erfordern Registermarken einen zusätzlichen Platz auf dem Bedruckstoff und zum anderen stellen Registermarken nur einen indirekten Bezug zur tatsächlichen Position der Farbauszüge, die in ihrer Summe das Druckbild bilden, zueinander her.

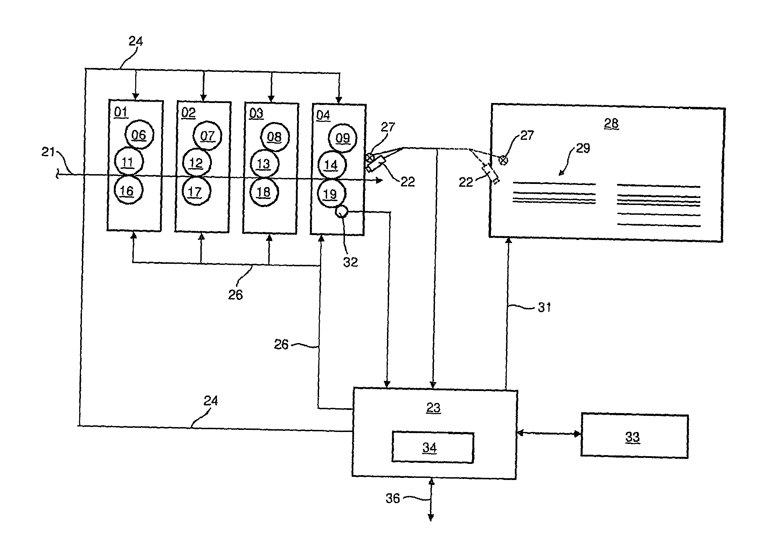

Ein Ausführungsbeispiel der Erfindung ist in der Zeichnung dargestellt und wird im Folgenden näher beschrieben.

Die einzige Figur zeigt in einer stark vereinfachten Darstellung beispielhaft vier aneinandergereihte Druckwerke 01; 02; 03; 04 einer Offset-Rotationsdruckmaschine jeweils mit einem Formzylinder 06; 07; 08; 09, einem Übertragungszylinder 11; 12; 13; 14 und einem Gegendruckzylinder 16; 17; 18; 19, wobei zur Herstellung beidseitig bedruckter Druckerzeugnisse jeder Gegendruckzylinder 16; 17; 18; 19 vorzugsweise ebenfalls als ein Übertragungszylinder ausgebildet ist, der seinerseits mit einem ihm zugeordneten (nicht dargestellten) Formzylinder zusammenwirkt. Ein Druckträger 21, z. B. ein Druckbogen 21 oder eine Materialbahn 21, vorzugsweise eine Papierbahn 21, wird im Druckprozess jeweils zwischen dem Übertragungszylinder 11;12; 13; 14 und dem Gegendruckzylinder 16; 17; 18; 19 hindurchgeführt und mit mindestens einem Druckbild bedruckt. Es ist für die Erfindung unerheblich, ob die Druckwerke 01; 02; 03; 04 derart angeordnet sind, dass der Druckträger 21 horizontal oder vertikal durch die Druckmaschine geführt wird.

Ein Bildsensor 22, z. B. eine Farbkamera 22, vorzugsweise eine digitale Halbleiterkamera 22 mit mindestens einem CCD-Chip, ist vorzugsweise am Ausgang des in Transportrichtung des Druckträgers 21 letzten Druckwerks 04 der Druckmaschine angeordnet und mit seinem Bildaufnahmebereich vorzugsweise unmittelbar und direkt auf den Druckträger 21 gerichtet, wobei der Bildaufnahmebereich des Bildsensors 22 zumindest die gesamte Breite des Druckträgers 21 erfasst, wobei sich die Breite des Druckträgers 21 quer zu dessen Transportrichtung durch die Druckmaschine erstreckt. Der Bildsensor 22 erfasst somit ein elektronisch auswertbares Bild von der gesamten Breite der bedruckten Papierbahn 21, wobei entlang der Breite der Papierbahn 21 mindestens ein Druckbild auf dem Druckträger 21 aufgebracht ist. Der Bildsensor 22 ist z. B. als eine Flächenkamera 22 ausgebildet.

Der Bildsensor 22 überträgt die mit dem aufgenommenen Bild korrelierenden Daten an eine geeignete Auswerteeinheit 23, insbesondere eine programmgesteuerte, elektronische Rechenanlage 23, die z. B. in einem zur Druckmaschine gehörenden Leitstand angeordnet ist. Für den Druckprozess relevante Parameter können jetzt durch eine in der Auswerteeinheit 23 durchgeführte Analyse und Auswertung des aufgenommenen Bildes kontrolliert und im Bedarfsfall durch in der Auswerteeinheit 23 ablaufende Programme sozusagen selbsttätig korrigiert werden. Die Auswertung und Korrektur aller für den Druckprozess relevanter Parameter erfolgt hierbei praktisch gleichzeitig mittels derselben Auswerteeinheit 23. Insbesondere wird das vom Bildsensor 22 während einer laufenden Produktion der Druckmaschine erfasste und in Form einer Datenmenge der Auswerteeinheit 23 zugeleitete Bild dahingehend ausgewertet, ob das aktuell durch das Bild erfasste und ausgewertete Druckbild gegenüber einem zuvor erfassten und ausgewerteten Druckbild eine Tonwertveränderung, insbesondere eine Tonwertzunahme aufweist, d. h. ein aktuell aufgenommenes Bild wird im laufenden Druckprozess im Vergleich zu einem Referenzbild geprüft. Wenn das Ergebnis der Prüfung eine Tonwertveränderung ist, d. h. i. d. R. eine drucktechnisch unvermeidbare Tonwertzunahme, wird die Dosierung und/oder die Zufuhr der Farbe in der Druckmaschine durch mindestens einen von der Auswerteeinheit 23 ausgehenden, über eine Datenleitung 24 geleiteten und auf mindestens eines der Druckwerke 01; 02; 03; 04 wirkenden ersten Stellbefehl dahingehend verändert, dass die Tonwertveränderung durch ein dem aktuell geprüften Bild nachfolgendes Aufbringen von Farbe minimal wird. Nach der mit der Veränderung der Dosierung und/oder der Zufuhr der Farbe durchgeführten Regelung der Farbdichte entspricht ein dem aktuell geprüften Bild nachfolgendes Bild von einem Druckbild in seinem Farbeindruck wieder besser einem zuvor geprüften Bild eines Druckbildes, d. h. dem Referenzbild. Die Kontrolle und Regelung der Tonwertveränderung ist deshalb wichtig, um im Druckprozess die Farbbalance bzw. Graubalance und damit den Farbeindruck der produzierten Druckerzeugnisse - gegebenenfalls innerhalb zulässiger Toleranzgrenzen - möglichst konstant zu halten, worin ein wichtiges Qualitätsmerkmal für Druckerzeugnisse besteht.

Ebenso wird die aus der Abbildung des Druckbildes generierte und an die Auswerteeinheit 23 übertragene Datenmenge zur Prüfung einer Registerhaltigkeit des auf dem Druckträger 21 aufgebrachten Druckbildes herangezogen, insbesondere zur Prüfung und gegebenenfalls zur Korrektur eines Farbregisters von einem im Mehrfarbendruck gedruckten Druckbild. In der Druckmaschine ist mindestens ein vorzugsweise motorisch verstellbares Register vorgesehen, z. B. ein Umfangsregister oder ein Seitenregister, gegebenenfalls auch eine Diagonalverstellung für mindestens einen der Formzylinder 06; 07; 08; 09 gegenüber dem ihm zugeordneten Übertragungszylinder 11; 12; 13; 14, wobei das Register durch mindestens einen von der Auswerteeinheit 23 ausgehenden, über eine Datenleitung 26 geleiteten und auf mindestens eines der Druckwerke 01; 02; 03; 04 wirkenden zweiten Stellbefehl in Abhängigkeit von dieser Prüfung dahingehend geregelt wird, dass sich für ein der Aufnahme des ausgewerteten Bildes nachfolgendes Druckbild eine höchst mögliche Registergenauigkeit ergibt. Eine Einstellung oder Verstellung der Register wird somit von der Auswerteeinheit 23 aus den Bilddaten errechnet, die der Bildsensor 22 der Auswerteeinheit 23 zur Verfügung stellt. Mit der Einstellung oder Verstellung des Seitenregisters kann auch Fan-out bedingter Querdehnung entgegengewirkt werden, wobei diese Querdehnung insbesondere in Druckmaschinen auftritt, die eine sogenannte Achterturmbauweise für ihre Druckwerke aufweisen.

Die Druckmaschine ist vorzugsweise wellenlos ausgebildet. In einer derartigen Druckmaschine verfügen vorzugsweise die Formzylinder 06; 07; 08; 09 über Einzelantriebe, die von den Antrieben für die Gegendruckzylinder 16; 17; 18; 19 mechanisch entkoppelt sind, sodass die Phasenlage bzw. die Winkellage der Formzylinder 06; 07; 08; 09 gegenüber den Gegendruckzylindern 16; 17; 18; 19 durch eine entsprechende Steuerung oder Regelung vorzugsweise der Antriebe der Formzylinder 06; 07; 08; 09 verändert werden kann, wann immer eine Auswertung des vom Druckträger 21 mittels des Bildsensors 22 aufgenommenen Bildes dies für erforderlich erscheinen lässt. Der gesamte Bildinhalt, und nicht nur einzelne lokal begrenzte Bildelemente des Druckträgers 21, wie z. B. Referenzmarken o. ä., beeinflusst damit die Steuerung oder Regelung des Druckwerks, insbesondere die Antriebe der Formzylinder 06; 07; 08; 09.

Ein von der Auswerteeinheit 23 aus dem Bildinhalt des vom Druckbild aufgenommenen Bildes generierter Stellbefehl wirkt auf eine Steuereinrichtung oder Regeleinrichtung eines vorzugsweise lagegeregelten elektrischen Motors zum rotativen Antrieb während des Druckens zumindest von einem der Formzylinder 06; 07; 08; 09, dem ihm zugeordneten Übertragungszylinder 11; 12; 13; 14 oder Gegendruckzylinder 16; 17; 18; 19. Damit ist zumindest in einem der Druckwerke 01; 02; 03; 04 der Druckmaschine der Antrieb insbesondere des Formzylinders 06; 07; 08; 09 oder des diesem Formzylinder 06; 07; 08; 09 zugeordneten Übertragungszylinders 11; 12; 13; 14 unabhängig vom Antrieb des Formzylinders 06; 07; 08; 09 oder des diesem Formzylinder 06; 07; 08; 09 zugeordneten Übertragungszylinders 11; 12; 13; 14 in einem anderen Druckwerk 01; 02; 03; 04 der Druckmaschine vorzugsweise durch elektrische Signale steuerbar oder regelbar, insbesondere kann die gegenseitige Winkellage oder Phasenlage der am Druck des Druckerzeugnisses, d. h. des Druckbildes, beteiligten, in unterschiedlichen Druckwerken 01; 02; 03; 04 der Druckmaschine angeordneten Formzylinder 06; 07; 08; 09 oder deren zugeordnete Übertragungszylinder 11; 12; 13; 14 durch die zugehörige Steuereinrichtung oder Regeleinrichtung, z. B. die Auswerteeinheit 23, auf eine für die Erzeugung des Druckerzeugnisses geeignete Registerung eingestellt werden. Der elektrische Motor des Formzylinders 06; 07; 08; 09 ist vorzugsweise koaxial zur Achse des Formzylinders 06; 07; 08; 09 angeordnet, wobei der Rotor des Motors mit einem Zapfen der Achse des Formzylinders 06; 07; 08; 09 vorzugsweise in der Weise steif verbunden ist, wie es z. B. in der DE 43 22 744 A1 beschrieben ist. Die in unterschiedlichen Druckwerken 01; 02; 03; 04 der Druckmaschine angeordneten Gegendruckzylinder 16; 17; 18; 19 können, wie z. B. in der EP 0 812 683 A1 beschrieben, z. B. durch einen Zug von Zahnrädern mechanisch miteinander verbunden sein und z. B. einen gemeinsamen Antrieb aufweisen, wobei aber der Formzylinder 06; 07; 08; 09 oder der zugeordnete Übertragungszylinder 11; 12; 13; 14 hinsichtlich ihres Antriebs von dem ihnen zugeordneten Gegendruckzylinder 16; 17; 18; 19 entkoppelt bleiben. Zwischen dem Formzylinder 06; 07; 08; 09 und dem ihm zugeordneten Übertragungszylinder 11; 12; 13; 14 kann eine Kopplung z. B. mittels ineinander greifender Zahnräder bestehen, sodass der Formzylinder 06; 07; 08; 09 und der ihm zugeordnete Übertragungszylinder 11; 12; 13; 14 von demselben Antrieb angetrieben werden. Die Steuereinrichtung oder Regeleinrichtung der Antriebe zumindest der Formzylinder 06; 07; 08; 09 ist z. B. in der Auswerteeinheit 23 integriert.

Die Steuerung oder Regelung der Phasenlage bzw. der Winkellage der Formzylinder 06; 07; 08; 09 gegenüber den Gegendruckzylindern 16; 17; 18; 19 erfolgt bezüglich einer festgelegten Referenzeinstellung, sodass der Formzylinder 06; 07; 08; 09 gegenüber dem ihm zugeordneten Gegendruckzylinder 16; 17; 18; 19 eine voreilende oder nacheilende Rotation aufweisen kann, wobei die Relation der Rotationen vom Formzylinder 06; 07; 08; 09 und dem ihm zugeordneten Gegendruckzylinder 16; 17; 18; 19 in Abhängigkeit vom Bildinhalt des vom Bildsensor 22 aufgenommenen Bildes eingestellt und mit der Steuereinrichtung oder Regeleinrichtung ihrer Antriebe auch nachgeführt wird. In gleicher Weise kann auch die Phasenlage bzw. Winkellage von im Druckprozess einander nachgeordneter Formzylinder 06; 07; 08; 09 bezüglich einer festgelegten Referenzeinstellung gesteuert oder geregelt werden, was insbesondere im Mehrfarbendruck einer in einander nachgeordneten Druckwerken 01; 02; 03; 04 der Druckmaschine farbenweise gedruckten Drucksache von Bedeutung ist. Wenn aus dem vom vorzugsweise mehrere Farben aufweisenden Druckbild aufgenommenen Bild hervorgeht, dass für eine in einem der Druckwerke 01; 02; 03; 04 verdruckten Farbe Korrekturbedarf besteht, setzt die Auswerteeinheit 23 an das betreffende Druckwerk 01; 02; 03; 04 ihren dem festgestellten Störeinfluss entgegenwirkenden Stellbefehl ab.

Wenn die von der Auswerteeinheit 23 über Stellbefehle zu regelnden Stellantriebe, z. B. die Stellantriebe zur Regelung der Zufuhr der Farbe oder des Feuchtmittels sowie die Antriebe zur Regelung des Umfangsregisters oder des Seitenregisters, in der Druckmaschine an ein mit der Auswerteeinheit 23 in Verbindung stehendes Datennetz angeschlossen sind, sind die zur Übertragung des ersten und des zweiten Stellbefehls vorgesehenen Datenleitungen 24; 26 vorzugsweise durch das Datennetz realisiert.

Die Prüfung einer sich im Druckprozess einstellenden Tonwertveränderung und die Prüfung auf Registerhaltigkeit werden in der Auswerteeinheit 23 durch eine parallele Datenverarbeitung vorteilhafterweise gleichzeitig durchgeführt. Vorzugsweise werden diese beiden Prüfungen im laufenden Druckprozess fortlaufend durchgeführt, und zwar vorteilhafterweise am Ende des Druckprozesses und auch für jedes einzelne, erzeugte Druckexemplar.

Die Prüfung auf Registerhaltigkeit bezieht sich zunächst auf ein deckungsgleiches Übereinstimmen in der Stellung des Druckbildes oder Satzspiegels zwischen Schön- und Widerdruck oder auch zwischen Ober- und Unterseite bei der Herstellung von beidseitigen Druckerzeugnissen. Die Prüfung schließt aber auch z. B. die Prüfung des Passers ein, d. h. die Prüfung der vorgesehenen Genauigkeit, die einzelne Teilfarben beim Übereinanderdruck im Mehrfarbendruck aufweisen. Die Registergenauigkeit wie auch die Passergenauigkeit spielen im mehrfarbigen Druck eine wichtige Rolle.

Dem Bildsensor 22 ist vorteilhafterweise eine Beleuchtungsvorrichtung 27, z. B. eine Blitzlichtlampe 27 zugeordnet, wobei von der Blitzlichtlampe 27 ausgehende kurzzeitige Lichtblitze schnell laufende Bewegungsvorgänge, wie sie der Druckprozess darstellen, durch ein stroboskopisches Verfahren scheinbar stillstehen lassen und so für das menschliche Auge beobachtbar machen. Insbesondere bei einer Bogendruckmaschine kann die mit dem Bildsensor 22 durchgeführte Erfassung des Druckbildes auch in oder an einer Auslage 28 der Druckmaschine erfolgen, was in der Figur durch eine gestrichelte Darstellung des Bildsensors 22 und der zugehörigen Beleuchtungsvorrichtung 27 als eine mögliche Option zur Erfassung des Druckbildes hinter dem letzten Druckwerk 04 der betreffenden Druckseite oder am Ende der Druckmaschine dargestellt ist. Durch eine entsprechende Wahl des Bildsensors 22 und gegebenenfalls der zugehörigen Beleuchtungsvorrichtung 27 kann die Erfassung des Bildes auf einen visuell nicht sichtbaren spektralen Bereich, wie z. B. den infraroten oder ultravioletten Bereich ausgedehnt oder dorthin verschoben werden. Als Alternative zur bevorzugten Flächenkamera 22 mit einer Blitzlichtlampe 27 ist auch der Einsatz einer Zeilenkamera mit einer Permanentbeleuchtung möglich.

Da vorzugsweise jedes Druckexemplar einer Prüfung unterzogen wird, ist im laufenden Druckprozess, d. h. im Fortdruck, ein Trend sowohl für die Tonwertveränderung als auch für die Registerhaltigkeit nacheinander produzierter Druckexemplare erkennbar. Die Druckexemplare können je nach dem im laufenden Druckprozess ermittelten Wert für ihren Tonwert und/oder ihr zugehöriges Register in Gruppen verschiedener Qualitätsstufen klassifiziert und bei Überschreitung einer zulässigen Toleranzgrenze als Ausschussexemplare gekennzeichnet werden. Ausschussexemplare können von der Auswerteeinheit 23 gesteuert ausgeschleust oder insbesondere bei einer Bogendruckmaschine in der Auslage 28 zumindest auf einem separaten Ablagestapel 29 abgelegt werden. Zu diesem Zweck ergeht von der das Bild auswertenden Auswerteeinheit 23 mindestens ein über eine Datenleitung 31 geleiteter dritter Stellbefehl, z. B. ein Makulatursignal, an mindestens einen auf mindestens eine Einrichtung zum Transport des Druckträgers 21 wirkenden Stellantrieb zur Sortierung des Exemplarstromes.

Zur Synchronisation der Frequenz, mit der die Erfassung von Bildern des Druckträgers 21 erfolgt, mit der Transportgeschwindigkeit des Druckträgers 21, d. h. der Geschwindigkeit z. B. der Papierbahn 21, ist zumindest in einem der Druckwerke 01; 02; 03; 04, vorzugsweise in demjenigen Druckwerk 01; 02; 03; 04, in oder an dem die Erfassung der Bilder mit dem Bildsensor 22 erfolgt, ein Drehgeber 32 installiert, wobei der laufende Drehgeber 32 in einem festen Verhältnis zur Drehzahl desjenigen Übertragungszylinders 11; 12; 13; 14 steht, an dem der Bildsensor 22 die Bilder erfasst. Der Drehgeber 32 gibt sein Ausgangssignal an die Auswerteeinheit 23 und/oder auch an den Bildsensor 22 ab. Das Ausgangssignal des Drehgebers 32 wird u. a. als Auslöser für die Blitzlichtlampe 27 genutzt.

Das vom Bildsensor 22 erfasste und in Form einer Datenmenge der Auswerteeinheit 23 zugeleitete Bild wird vorzugsweise auf einem Monitor einer mit der Auswerteeinheit 23 verbundenen und im bidirektionalen Datenaustausch stehenden Ein- und Ausgabeeinheit 33 angezeigt. Gleichfalls bietet die Ein- und Ausgabeeinheit 33 Korrekturmöglichkeiten für mindestens eine der erwähnten Regelungen, indem es manuelle Eingaben und/oder ein Auslösen von mindestens einem Stellbefehl ermöglicht.

Die Auswerteeinheit 23 verfügt über einen Speicher 34 u. a. zur Speicherung erfasster Bildsequenzen sowie zur Speicherung von Daten, die für eine Protokollierung und eine damit einhergehende Dokumentation der Qualität der Druckerzeugnisse sowie für statistische Analysen zum Druckprozess nützlich sind. Es ist von Vorteil, wenn die Auswerteeinheit 23 die in ihr ausgewerteten und/oder gespeicherten Daten durch einen entsprechenden Anschluss 36 einem Firmennetzwerk zur Verfügung stellen kann.

Für den von der Auswerteeinheit 23 durchgeführten Vergleich von Daten, die mit einem während einer laufenden Produktion der Druckmaschine aktuell aufgenommenen Bild korrelieren, mit Daten eines zuvor generierten Bildes kann vorgesehen sein, dass die Daten des zuvor generierten Bildes mit einem in einer der Druckmaschine vorgeordneten Druckvorstufe erstellten Bild korrelieren, wobei eine Datenverarbeitungseinrichtung der Druckvorstufe (nicht dargestellt) mit der Auswerteeinheit 23 verbunden ist und die Daten des zuvor generierten Bildes der Auswerteeinheit 23 zuleitet. Damit werden die Daten des zuvor generierten Bildes alternativ oder zusätzlich zu Daten, die mit einem vom Bildsensor 22 aufgenommenen Bild korrelieren, generiert und der Auswerteeinheit 23 zur Auswertung zur Verfügung gestellt. Mit dem Druckbild korrelierende Daten aus der Druckvorstufe bilden für die Steuerung oder Regelung des Farbregisters gegenüber Daten, die aus in der laufenden Produktion zuvor gedruckten Bildern gewonnen werden, die genaueren Referenzdaten.

Die vorgeschlagene Vorrichtung gestattet eine Registerregelung und Farbregelung auf der Grundlage einer Analyse desselben vom Druckbild mit dem Bildsensor 22 erfassten Bildes, indem das Bild des Druckbildes hinsichtlich verschiedener für den Druckprozess relevanter Parameter in einer einzigen Auswerteeinheit 23 ausgewertet wird, sowie gleichzeitig eine Inspektion des Druckbildes zur Beurteilung der Qualität der Drucksache.

Der Registerregelung liegt dabei eine Registermessung im Druckbild zugrunde. Nachdem alle für das Druckbild erforderlichen Druckfarben gedruckt wurden, wird vorzugsweise am Ende der Druckmaschine das gesamte Druckbild von der Kamera erfasst. In der Auswerteeinheit 23 erfolgt eine Zerlegung des erfassten Druckbildes vorzugsweise in die in der Drucktechnik gebräuchlichen Farbseparationen CMYK sowie eine Analyse geeigneter Druckbildausschnitte und eine relative Positionsbestimmung einer Farbseparation in Bezug auf eine Referenzfarbseparation durch Korrelationsverfahren mit einem vorher erfassten oder gewonnenen Referenzdruckbild.

Das Referenzbild wird z. B. entweder aus der Druckvorstufe bezogen, was den Vorteil hat, dass das Referenzbild schon In den einzelnen Farbauszügen vorliegt, oder es wird ein Referenzbild, z. B. ein das Druckbild aufweisender Referenzbogen, zur Auswertung aus einem Andruck des Druckbildes herangezogen, wobei dieses Referenzbild zusätzlich noch in die Farbseparationen zeriegt werden muss. Dieser Referenzbogen wird erfasst, nachdem das Druckbild manuell einmalig so eingestellt wurde, das alle gedruckten Druckfarben richtig zueinander positioniert sind und damit ein ordnungsgemäßes Farbregister eingestellt ist. Dieses so gewonnene Referenzdruckbild kann für spätere Wiederholaufträge abgespeichert werden, sodass bei einem Wiederholauftrag auf dieses früher aufgenommene Referenzbild zurückgegriffen werden kann. Durch einen Zugriff auf das gespeicherte Referenzdruckbild kann das Farbregister von der Auswerteeinheit 23 auch automatisch ohne manuellen Eingriff eingestellt werden, was bei einem Wiederholauftrag zu einer weiteren Reduzierung der Makulatur führt.

Aus dem Referenzdruckbild werden charakteristische und geeignete Ausschnitte ausgewählt, anhand derer die Position der einzelnen Farbauszüge zum Referenzfarbauszug bestimmt wird. Dieses ist die so genannte Sollposition für den späteren Registervergleich. Dieses Referenzbild wird inklusive der Farbauszüge und der Sollposition z. B. im Speicher 34 abgespeichert. Die Auswahl der geeigneten Druckbildausschnitte kann manuell durch den Bediener oder automatisch durch die Auswerteeinheit 23, z. B. für eine Voreinstellung der Sollposition, erfolgen. Geeignete Druckbildausschnitte hinsichtlich der Registervermessung sind Bereiche, in denen die zu vermessende Druckfarbe dominiert oder ausschließlich vorkommt.

Im laufenden Druckprozess, d. h. im Fortdruck, wird mittels des Kamerasystems jedes Druckbild erfasst und in die Farbauszüge CMYK zerlegt. Innerhalb der zuvor festgelegten, geeigneten Druckbildausschnitte wird nun die Position der einzelnen Farbauszüge bestimmt. Dies geschieht durch Vergleich mit den Farbauszügen aus dem Referenzdruckbild z. B. durch ein Korrelationsverfahren, insbesondere ein Kreuzkorrelationsverfahren. Mittels des Korrelationsverfahrens kann die Position der Farbauszüge auf ca. 0,1 Pixel der Kameraauflösung bestimmt werden. Wenn für jeden Druckbogen ein stationärer Registerversatz wiederholt bestimmt wird, ist eine hohe Genauigkeit des Messwertes durch eine Unterdrückung stochastischer Streuung gewährleistet.

Die Bestimmung der Position der einzelnen Farbauszüge erfolgt in Bahnlaufrichtung entsprechend dem Längsregister und in Querrichtung zur Bahnlaufrichtung entsprechend dem Seitenregister. Die so erhaltenen Positionsdifferenzen werden von der Auswerteeinheit 23 in Stellbefehle umgewandelt und als Korrektursignale an das Verstellsystem, d. h. an die Antriebe, gesendet.

Im Offsetdruck werden Sonderfarben nicht mit den Standardfarben, d. h. den Skalenfarben CMYK, vermischt, sondern getrennt verdruckt. Sonderfarben werden daher auch gesondert vermessen. Zunächst müssen die Bereiche, in denen Sonderfarben verdruckt werden, festgelegt werden. Für jede der Sonderfarben werden nun eigene geeignete Bereiche festgelegt, in denen die Position des Farbauszuges in der selben Weise wie für die Skalenfarben CMYK, d. h. die Standardfarben, bestimmt werden. Die weitere Vorgehensweise zur Registerregelung bei Sonderfarben ist mit der zuvor für Standardfarben beschriebenen Vorgehensweise identisch.

### Bezugszeichenliste

- 01: Druckwerk
- 02: Druckwerk
- 03: Druckwerk
- 04: Druckwerk
- 05: -
- 06: Formzylinder
- 07: Formzylinder
- 08: Formzylinder
- 09: Formzylinder
- 10: -
- 11: Übertragungszylinder
- 12: Übertragungszylinder
- 13: Übertragungszylinder
- 14: Übertragungszylinder
- 15: -
- 16: Gegendruckzylinder, Übertragungszylinder
- 17: Gegendruckzylinder, Übertragungszylinder
- 18: Gegendruckzylinder, Übertragungszylinder
- 19: Gegendruckzylinder, Übertragungszylinder
- 20: -
- 21: Druckträger, Druckbogen, Materialbahn, Papierbahn
- 22: Bildsensor, Farbkamera, Flächenkamera, Halbleiterkamera
- 23: Auswerteeinheit, Rechenanlage
- 24: Datenleitung
- 25: -
- 26: Datenleitung
- 27: Beleuchtungsvorrichtung, Blitzlichtlampe
- 28: Auslage
- 29: Ablagestapel

- 30: -
- 31: Datenleitung
- 32: Drehgeber
- 33: Ein- und Ausgabeeinheit
- 34: Speicher
- 35: -
- 36: Anschluss eines Firmennetzwerks

## Patentansprüche

1. Verfahren zur Verwendung einer Vorrichtung zur Regelung mindestens eines Registers in einer Druckmaschine mit mindestens einem Druckwerk (01; 02; 03; 04) mit zumindest einem Formzylinder (06; 07; 08; 09), einem Übertragungszylinder (11; 12; 13; 14) und einem Gegendruckzylinder (16; 17; 18; 19), wobei ein Bildsensor (22) von einem im Druckwerk (01; 02; 03; 04) mit Farbe bedruckten Druckträger (21) ein Bild aufnimmt und das Bild in einer Auswerteeinheit (23) auswertet, wobei die Auswerteeinheit (23) einen Stellbefehl an einen Stellantrieb zur Regelung des Registers aus einem Vergleich von Daten, die mit einem während einer laufenden Produktion der Druckmaschine aktuell aufgenommenen Bild korrelieren, mit Daten eines zuvor generierten Bildes generiert, wobei die Auswerteeinheit (23) aus den Daten des aktuell aufgenommenen Bildes dessen Zerlegung in Farbseparationen (CMYK) vornimmt, wobei die Auswerteeinheit (23) eine relative Positionsbestimmung einer aus den Daten des aktuell aufgenommenen Bildes vorgenommenen Farbseparation in Bezug auf eine aus den Daten des zuvor generierten Bildes vorgenommenen Referenzfarbseparation vornimmt, wobei die Daten des zuvor generierten Bildes mit einem in einer der Druckmaschine vorgeordneten Druckvorstufe erstellten Bild korrelieren, **dadurch gekennzeichnet, dass** der Formzylinder (06; 07; 08; 09) von einem von dem ihm zugeordneten Gegendruckzylinder (16; 17; 18; 19) getrennt steuerbaren oder regelbaren Antrieb angetrieben wird, wobei die Auswerteeinheit (23) aus dem Vergleich der Daten des während der laufenden Produktion der Druckmaschine aktuell aufgenommenen Bildes mit Daten des zuvor generierten Bildes einen Stellbefehl an einen Stellantrieb zur Regelung der Zufuhr der Farbe generiert, wobei zur Übertragung des jeweiligen Stellbefehls an diesen Stellantrieb oder an den Antrieb des Formzylinders (06; 07; 08; 09) ein selbes mit der Auswerteeinheit (23) in Verbindung stehendes Datennetz verwendet wird.

2. Verfahren nach Anspruch 1, **dadurch gekennzeichnet, dass** der Bildsensor (22) auf den Druckträger (21) gerichtet ist.

3. Verfahren nach Anspruch 1, **dadurch gekennzeichnet, dass** der Bildsensor (22) mit seinem Bild die gesamte sich quer zur Transportrichtung erstreckende Breite des bedruckten Druckträgers (21) erfasst.

4. Verfahren nach Anspruch 1, **dadurch gekennzeichnet, dass** die Auswerteeinheit (23) die relative Positionsbestimmung durch ein Korrelationsverfahren vornimmt.

5. Verfahren nach Anspruch 1, **dadurch gekennzeichnet, dass** die Auswerteeinheit (23) die relative Positionsbestimmung durch ein Kreuzkorrelationsverfahren vornimmt.

6. Verfahren nach Anspruch 1, **dadurch gekennzeichnet, dass** die Auswerteeinheit (23) die relative Positionsbestimmung für ein aktuell aufgenommenes Bild mehrfach durchführt.

7. Verfahren nach Anspruch 1, **dadurch gekennzeichnet, dass** die Auswerteeinheit (23) aus dem Vergleich der Daten des während der laufenden Produktion der Druckmaschine aktuell aufgenommenen Bildes mit Daten des zuvor generierten Bildes einen Stellbefehl an einen Stellantrieb zur Regelung einer Zufuhr eines Feuchtmittels generiert.

8. Verfahren nach Anspruch 1, **dadurch gekennzeichnet, dass** das Register ein Umfangsregister, ein Seitenregister oder eine Diagonalverstellung des Formzylinders (06; 07; 08; 09) gegenüber dem ihm zugeordneten Übertragungszylinder (11; 12; 13; 14) ist.

9. Verfahren nach Anspruch 1, **dadurch gekennzeichnet, dass** die Auswerteeinheit (23) mit ihrem Stellbefehl an den Antrieb zur Regelung des Registers eine Phasenlage oder eine Winkellage des Formzylinders (06; 07; 08; 09) steuert oder regelt.

10. Verfahren nach Anspruch 1, **dadurch gekennzeichnet, dass** die Auswerteeinheit (23) einen Anschluss (36) an ein Firmennetzwerk aufweist.

11. Verfahren nach Anspruch 1, **dadurch gekennzeichnet, dass** die Auswerteeinheit (23) im bidirektionalen Datenaustausch mit einer Ein- und Ausgabeeinheit (33) steht, wobei die Ein- und Ausgabeeinheit (33) durch die Möglichkeit manueller Eingaben und/oder eines Auslösens von mindestens einem Stellbefehl Korrekturmöglichkeiten für die von der Auswerteeinheit (23) generierten Stellbefehle aufweist.

12. Verfahren nach Anspruch 11, **dadurch gekennzeichnet, dass** die Ein- und Ausgabeeinheit (33) einen Monitor zur Anzeige des erfassten Bildes aufweist.

13. Verfahren nach Anspruch 1, **dadurch gekennzeichnet, dass** die Auswerteeinheit (23) einen Speicher (34) zur Speicherung erfasster Bildsequenzen aufweist.

14. Verfahren nach Anspruch 1, **dadurch gekennzeichnet, dass** die Druckmaschine auf dem Druckträger (21) mindestens ein Druckbild aufbringt.

15. Verfahren nach Anspruch 1, **dadurch gekennzeichnet, dass** die Regelung gleichzeitig zusammen mit einer Inspektion des Druckbildes erfolgt.

16. Verfahren nach Anspruch 1, **dadurch gekennzeichnet, dass** der Bildsensor (22) am Ausgang des in Transportrichtung des Druckträgers (21) letzten Druckwerks (04) der Druckmaschine angeordnet ist.

17. Verfahren nach Anspruch 1, **dadurch gekennzeichnet, dass** der Bildsensor (22) in oder an einer Auslage (28) der Druckmaschine angeordnet ist.

18. Verfahren nach Anspruch 1, **dadurch gekennzeichnet, dass** die Auswerteeinheit (23) ihre Prüfung einer Tonwertveränderung und/oder ihre Prüfung auf Registerhaltigkeit im laufenden Druckprozess fortlaufend durchführt.

19. Verfahren nach Anspruch 1, **dadurch gekennzeichnet, dass** die Auswerteeinheit (23) ihre Prüfung der Tonwertveränderung und/oder ihre Prüfung auf Registerhaltigkeit für jedes in der Druckmaschine bedruckte Druckexemplar durchführt.

20. Verfahren nach Anspruch 1, **dadurch gekennzeichnet, dass** die Auswerteeinheit (23) geprüfte Druckexemplare in Gruppen verschiedener Qualitätsstufen klassifiziert.

21. Verfahren nach Anspruch 1, **dadurch gekennzeichnet, dass** die Auswerteeinheit (23) Daten für eine Protokollierung und eine damit einhergehende Dokumentation der Qualität der Druckerzeugnisse und/oder für statistische Analysen zum Druckprozess speichert.

22. Verfahren nach Anspruch 1, **dadurch gekennzeichnet, dass** die Auswerteeinheit (23) für ein Druckexemplar, das in seiner Regelabweichung eine zulässige Toleranzgrenze überschreitet, einen Stellbefehl an mindestens einen auf mindestens eine Einrichtung zum Transport des Druckträgers (21) wirkenden Stellantrieb zur Ausschleusung und/oder Kennzeichnung dieses Druckexemplars gibt.

23. Verfahren nach Anspruch 1, **dadurch gekennzeichnet, dass** zumindest in einem Druckwerk (01; 02; 03; 04) ein Drehgeber (32) zur Synchronisation der Frequenz, mit der die Erfassung von Bildern erfolgt, mit der Transportgeschwindigkeit des Druckträgers (21) installiert ist.

24. Verfahren nach Anspruch 23, **dadurch gekennzeichnet, dass** der Drehgeber (32) in dem Druckwerk (01; 02; 03; 04) installiert ist, in oder an dem mit dem Bildsensor (22) die Erfassung der Bilder erfolgt.

25. Verfahren nach Anspruch 23, **dadurch gekennzeichnet, dass** der Drehgeber (32) sein Ausgangssignal an die Auswerteeinheit (23) und/oder an den Bildsensor (22) abgibt.

26. Verfahren nach Anspruch 1, **dadurch gekennzeichnet, dass** die Auswerteeinheit (23) bei einer eine zulässige Toleranzgrenze überschreitenden Tonwertveränderung die Dosierung und/oder die Zufuhr der Farbe in der Druckmaschine dahingehend verändert, dass die Tonwertveränderung durch ein dem aktuell geprüften Bild nachfolgendes Aufbringen von Farbe minimal wird.

27. Verfahren nach Anspruch 1, **dadurch gekennzeichnet, dass** die Auswerteeinheit (23) mindestens ein in der Druckmaschine verstellbares Register dahingehend regelt, dass sich für ein der Aufnahme des ausgewerteten Bildes nachfolgendes Druckbild eine höchst mögliche Registergenauigkeit ergibt.

28. Verfahren nach Anspruch 1, **dadurch gekennzeichnet, dass** eine Datenverarbeitungseinrichtung der Druckvorstufe mit der Auswerteeinheit (23) verbunden ist, wobei die Datenverarbeitungseinrichtung die Daten des zuvor generierten Bildes der Auswerteeinheit (23) zuleitet.

29. Verfahren nach Anspruch 1, **dadurch gekennzeichnet, dass** die Druckmaschine mehrere Druckwerke (01; 02; 03; 04) aufweist, wobei zumindest in einem der Druckwerke (01; 02; 03; 04) der Druckmaschine der Antrieb des Formzylinders (06; 07; 08; 09) oder des diesem Formzylinder (06; 07; 08; 09) zugeordneten Übertragungszylinders (11; 12; 13; 14) unabhängig vom Antrieb des Formzylinders (06; 07; 08; 09) oder des diesem Formzylinder (06; 07; 08; 09) zugeordneten Übertragungszylinders (11; 12; 13; 14) in einem anderen Druckwerk (01; 02; 03; 04) der Druckmaschine steuerbar oder regelbar ist.

30. Verfahren nach Anspruch 29, **dadurch gekennzeichnet, dass** die Auswerteeinheit (23) mit dem von ihr abgesetzten Stellbefehl die gegenseitige Winkellage oder Phasenlage der am Druck des Druckbildes beteiligten, in unterschiedlichen Druckwerken (01; 02; 03; 04) der Druckmaschine angeordneten Formzylinder (06; 07; 08; 09) oder deren zugeordnete Übertragungszylinder (11; 12; 13; 14) auf eine für die Erzeugung des Druckbildes geeignete Registerung einstellt.

31. Verfahren nach Anspruch 1, **dadurch gekennzeichnet, dass** der Antrieb des Formzylinders (06; 07; 08; 09) koaxial zur Achse des Formzylinders (06; 07; 08; 09) angeordnet ist.

32. Verfahren nach Anspruch 1, **dadurch gekennzeichnet, dass** der Antrieb des Formzylinders (06; 07; 08; 09) mit der Achse des Formzylinders (06; 07; 08; 09) steif verbunden ist.

33. Verfahren nach Anspruch 1, **dadurch gekennzeichnet, dass** die Druckmaschine mehrere Druckwerke (01; 02; 03; 04) aufweist, wobei die in unterschiedlichen Druckwerken (01; 02; 03; 04) der Druckmaschine angeordneten Gegendruckzylinder (16; 17; 18; 19) mechanisch miteinander verbunden sind.

34. Verfahren nach Anspruch 33, **dadurch gekennzeichnet, dass** in unterschiedlichen Druckwerken (01; 02; 03; 04) der Druckmaschine angeordnete Gegendruckzylinder (16; 17; 18; 19) einen gemeinsamen Antrieb aufweisen.

35. Verfahren nach Anspruch 33, **dadurch gekennzeichnet, dass** der Antrieb der Gegendruckzylinder (16; 17; 18; 19) vom Antrieb der Formzylinder (06; 07; 08; 09) oder der Übertragungszylinder (11; 12; 13; 14) entkoppelt ist.

36. Verfahren nach Anspruch 1, **dadurch gekennzeichnet, dass** der Formzylinder (06; 07; 08; 09) und der ihm zugeordnete Übertragungszylinder (11; 12; 13; 14) einen gemeinsamen Antrieb aufweisen.

37. Verfahren nach Anspruch 1, **dadurch gekennzeichnet, dass** die Auswerteeinheit (23) aus den Daten des zuvor generierten Bildes eine Analyse geeigneter Druckbildausschnitte vornimmt.

38. Verfahren nach Anspruch 37, **dadurch gekennzeichnet, dass** geeignete Druckbildausschnitte Bereiche des Bildes sind, in denen die zu vermessende Druckfarbe dominiert oder ausschließlich vorkommt.

39. Verfahren nach Anspruch 37, **dadurch gekennzeichnet, dass** die Auswerteeinheit (23) innerhalb der geeigneten Druckbildausschnitte die Position der einzelnen Farbauszüge bestimmt.

40. Verfahren nach Anspruch 1, **dadurch gekennzeichnet, dass** die Auswerteeinheit (23) durch die relative Positionsbestimmung ermittelte Positionsdifferenzen zwischen der aus den Daten des aktuell aufgenommenen Bildes vorgenommenen Farbseparation und der aus den Daten des zuvor generierten Bildes vorgenommenen Referenzfarbseparation in Transportrichtung des Druckträgers (21) und/oder quer zur Transportrichtung des Druckträgers (21) in mindestens einen Stellbefehl umwandelt.

41. Verfahren nach Anspruch 1, **dadurch gekennzeichnet, dass** die Auswerteeinheit (23) für eine von Standardfarben (CMYK) abweichende Sonderfarbe eigene geeignete Druckbildausschnitte auswertet.

42. Verfahren nach Anspruch 37, **dadurch gekennzeichnet, dass** die Auswerteeinheit (23) die geeigneten Druckbildausschnitte im Speicher (34) speichert.

43. Verfahren nach Anspruch 42, **dadurch gekennzeichnet, dass** die Auswerteeinheit (23) die im Speicher (34) gespeicherten Druckbildausschnitte als eine Sollposition einstellt.

## Claims

1. Method for using a device for controlling at least one register in a printing press comprising at least one printing unit (01; 02; 03; 04) having at least one forme cylinder (06; 07; 08; 09), a transfer cylinder (11; 12; 13; 14) and a counter pressure cylinder (16; 17; 18; 19), an image sensor (22) recording an image from a print medium (21) printed with ink in the printing unit (01; 02; 03; 04) and the image being evaluated in an evaluation unit (23), the evaluation unit (23) generating a control command to an actuator for controlling the register from a comparison of data which correlate with an image actually recorded during ongoing production of the printing press with data of a previously generated image, the evaluation unit (23) performing a separation of the actually recorded image into colour separations (CMYK) from the data of said image, the evaluation unit (23) carrying out a relative position determination of a colour separation performed from the data of the actually recorded image in relation to a reference colour separation performed from the data of the previously generated image, the data of the previously generated image correlating with an image prepared in a preliminary printing stage upstream of the printing press, **characterized in that** the forme cylinder (06; 07; 08; 09) is driven by a drive which can be controlled or regulated separately from the counter pressure cylinder (16; 17; 18; 19) coordinated with it, the evaluation unit (23) generating a control command to an actuator for controlling the ink feed from the comparison of the data of the image actually recorded during ongoing production of the printing press with data of the previously generated image, a data network itself connected to the evaluation unit (23) being used for transmitting the respective control command to this actuator or to the drive of the forme cylinder (06; 07; 08; 09).

2. Method according to Claim 1, **characterized in that** the image sensor (22) is directed towards the print medium (21).

3. Method according to Claim 1, **characterized in that** the image of the image sensor (22) covers the entire width of the printed print medium (21) extending transversely to the transport direction.

4. Method according to Claim 1, **characterized in that** the evaluation unit (23) performs the relative position determination by a correlation method.

5. Method according to Claim 1, **characterized in that** the evaluation unit (23) performs the relative position determination by a cross-correlation method.

6. Method according to Claim 1, **characterized in that** the evaluation unit (23) carries out the relative position determination for an actually recorded image several times.

7. Method according to Claim 1, **characterized in that** the evaluation unit (23) generates a control command to an actuator for controlling the feed of a fountain solution from the comparison of the data of the image actually recorded during ongoing production of the printing press with data of the previously generated image.

8. Method according to Claim 1, **characterized in that** the register is a circumferential register, a side register or a diagonal adjustment of the forme cylinder (06; 07; 08; 09) relative to the transfer cylinder (11; 12; 13; 14) coordinated with it.

9. Method according to Claim 1, **characterized in that** the evaluation unit (23) controls or regulates a phase position or an angular position of the forme cylinder (06; 07; 08; 09) with its control command to the drive for regulating the register.

10. Method according to Claim 1, **characterized in that** the evaluation unit (23) has a connection (36) to a company network.

11. Method according to Claim 1, **characterized in that** the evaluation unit (23) is in bidirectional data exchange with an input and output unit (33), the input and output unit (33) having possibilities for correction for the control commands generated by the evaluation unit (23) through the possibility of manual input and/or triggering of at least one control command.

12. Method according to Claim 11, **characterized in that** the input and output unit (33) has a monitor for displaying the image detected.

13. Method according to Claim 1, **characterized in that** the evaluation unit (23) has a memory (34) for storing image sequences detected.

14. Method according to Claim 1, **characterized in that** the printing press applies at least one printed image to the print medium (21).

15. Method according to Claim 1, **characterized in that** the regulation is effected simultaneously together with an inspection of the printed image.

16. Method according to Claim 1, **characterized in that** the image sensor (22) is arranged at the exit of that printing unit (04) of the printing press which is the last one in the transport direction of the print medium (21).

17. Method according to Claim 1, **characterized in that** the image sensor (22) is arranged in or on a delivery (28) of the printing press.

18. Method according to Claim 1, **characterized in that** the evaluation unit (23) continuously carries out its checking of a change in tonal value and/or its checking for maintenance of register during the ongoing printing process.

19. Method according to Claim 1, **characterized in that** the evaluation unit (23) carries out its checking of the change in tonal value and/or its checking for maintenance of register for each printed copy printed in the printing press.

20. Method according to Claim 1, **characterized in that** the evaluation unit (23) classifies checked printed copies into groups of different quality levels.

21. Method according to Claim 1, **characterized in that** the evaluation unit (23) stores data for logging and associated documentation of the quality of the printed products and/or for statistical analyses of the printing process.

22. Method according to Claim 1, **characterized in that** for a printed copy which exceeds a permissible tolerance limit in its deviation, the evaluation unit (23) sends a control command to at least one actuator acting on at least one device for transporting the print medium (21) and intended for eliminating and/or identifying this printed copy.

23. Method according to Claim 1, **characterized in that** a shaft encoder (32) for synchronizing the frequency with which the detection of images takes place with the transport speed of the print medium (21) is installed at least in one printing unit (01; 02; 03; 04).

24. Method according to Claim 23, **characterized in that** the shaft encoder (32) is installed in the printing unit (01; 02; 03; 04) in or on which the detection of the images is effected with the image sensor (22).

25. Method according to Claim 23, **characterized in that** the shaft encoder (32) sends its output signal to the evaluation unit (23) and/or to the image sensor (22).

26. Method according to Claim 1, **characterized in that,** in the case of a tonal value change exceeding a permissible tolerance limit, the evaluation unit (23) changes the metering and/or the feed of the ink in the printing press so that the tonal value change becomes minimal through application of ink following the actually checked image.

27. Method according to Claim 1, **characterized in that** the evaluation unit (23) regulates at least one register adjustable in the printing press, so that the maximum possible register accuracy results for a printed image following the recording of the evaluated image.

28. Method according to Claim 1, **characterized in that** a data processing device of the pre-press stage is connected to the evaluation unit (23), the data processing device routing the data of the previously generated image to the evaluation unit (23).

29. Method according to Claim 1, **characterized in that** the printing press has a plurality of printing units (01; 02; 03; 04), wherein, at least in one of the printing units (01; 02; 03; 04) of the printing press, the drive of the forme cylinder (06; 07; 08; 09) or of the transfer cylinder (11; 12; 13; 14) coordinated with this forme cylinder (06; 07; 08; 09) being controllable or regulatable independently of the drive of the forme cylinder (06; 07; 08; 09) or of the transfer cylinder (11; 12; 13; 14) coordinated with this forme cylinder (06; 07; 08; 09) in another printing unit (01; 02; 03; 04) of the printing press.

30. Method according to Claim 29, **characterized in that** the evaluation unit (23), with the control command sent by it, adjusts the mutual angular position or phase position of the forme cylinder (06; 07; 08; 09) involved in printing of the printed image and arranged in different printing units (01; 02; 03; 04) of the printing press or of its coordinated transfer cylinder (11; 12; 13; 14) to a registration suitable for producing the printed image.

31. Method according to Claim 1, **characterized in that** the drive of the forme cylinder (06; 07; 08; 09) is arranged coaxially with the axis of the forme cylinder (06; 07; 08; 09).

32. Method according to Claim 1, **characterized in that** the drive of the forme cylinder (06; 07; 08; 09) is rigidly connected to the axle of the forme cylinder (06; 07; 08; 09).

33. Method according to Claim 1, **characterized in that** the printing press has a plurality of printing units (01; 02; 03; 04), the counter pressure cylinders (16; 17; 18; 19) arranged in different printing units (01; 02; 03; 04) of the printing press being mechanically connected to one another.

34. Method according to Claim 33, **characterized in that** counter pressure cylinders (16; 17; 18; 19) arranged in different printing units (01; 02; 03; 04) of the printing press have a common drive.

35. Method according to Claim 33, **characterized in that** the drive of the counter pressure cylinder (16; 17; 18; 19) is decoupled from the drive of the forme cylinder (06; 07; 08; 09) or of the transfer cylinder (11; 12; 13; 14).

36. Method according to Claim 1, **characterized in that** the forme cylinder (06; 07; 08; 09) and the transfer cylinder (11; 12; 13; 14) coordinated with it have a common drive.

37. Method according to Claim 1, **characterized in that** the evaluation unit (23) performs an analysis of suitable printed image sections from the data of the previously generated image.

38. Method according to Claim 37, **characterized in that** suitable printed image sections are those regions of the image in which the printing ink to be measured dominates or occurs exclusively.

39. Method according to Claim 37, **characterized in that** the evaluation unit (23) determines the position of the individual colour separations within the suitable printed image sections.

40. Method according to Claim 1, **characterized in that** the evaluation unit (23) converts into at least one control command position differences between the colour separation performed from the data of the actually recorded image and the reference colour separation performed from the data of the previously generated image, in the transport direction of the print medium (21) and/or transversely to the transport direction of the print medium (21), which position differences are determined by the relative position determination.

41. Method according to Claim 1, **characterized in that** the evaluation unit (23) evaluates its own suitable printed image sections for a special colour differing from standard colours (CMYK).

42. Method according to Claim 37, **characterized in that** the evaluation unit (23) stores the suitable printed image sections in the memory (34).

43. Method according to Claim 42, **characterized in that** the evaluation unit (23) sets, as a required position, the printed image sections stored in the memory (34).

## Revendications

1. Procédé d'utilisation d'un dispositif pour régler au moins un registre dans une machine à imprimer comprenant au moins un groupe d'impression (01 ; 02 ; 03; 04) avec au moins un cylindre de forme (06 ; 07 ; 08 ; 09), un cylindre de transfert (11 ; 12 ; 13 ; 14) et un cylindre de contre-pression (16 ; 17 ; 18 ; 19), un capteur d'images (22) enregistrant une image d'un support d'impression (21) imprimé avec de l'encre dans le groupe d'impression (01 ; 02 ; 03 ; 04) et évaluant l'image dans une unité d'évaluation (23), l'unité d'évaluation (23) générant un ordre de réglage pour un entraînement de réglage pour régler le registre, à partir d'une comparaison de données, en corrélation avec une image enregistrée actuellement pendant une production en cours de la machine à imprimer, avec des données issues d'une image générée précédemment, l'unité d'évaluation (23), à partir des données de l'image enregistrée actuellement, effectuant sa décomposition en séparation des couleurs (CMYK), l'unité d'évaluation (23) effectuant une détermination de position relative d'une séparation des couleurs effectuée à partir des données de l'image enregistrée actuellement, par rapport à une séparation des couleurs de référence, effectuée à partir des données issues de l'image générée précédemment, les données issues de l'image générée précédemment étant en corrélation avec une image établie dans un étage préliminaire d'impression, installé en amont de la machine à imprimer, **caractérisé en ce que** le cylindre de forme (06 ; 07 ; 08 ; 09) est entraîné par un entraînement pouvant être commandé ou pouvant être réglé séparément du cylindre de contre-pression (16 ; 17 ; 18 ; 19) lui étant associé, l'unité d'évaluation (23), à partir de la comparaison des données de l'image enregistrée actuellement pendant la production en cours de la machine à imprimer, avec des données issues d'une image générée précédemment, générant un ordre de commande destiné à un entraînement de réglage, pour régler l'alimentation en encre, un même réseau de données, relié à l'unité d'évaluation (23), étant utilisé pour la transmission de l'ordre de commande respectif à cet entraînement de réglage ou à l'entraînement du cylindre de forme (06 ; 07 ; 08 ; 09).

2. Procédé selon la revendication 1, **caractérisé en ce que** le capteur d'image (22) est orienté vers le support d'impression (21).

3. Procédé selon la revendication 1, **caractérisé en ce que** le capteur d'image (22) appréhende avec son image l'ensemble de la largeur, s'étendant transversalement à la direction de transport, du support d'impression (21) imprimé.

4. Procédé selon la revendication 1, **caractérisé en ce que** l'unité d'évaluation (23) effectue la détermination de position relative au moyen d'un procédé à corrélation.

5. Procédé selon la revendication 1, **caractérisé en ce que** l'unité d'évaluation (23) effectue la détermination de position relative au moyen d'un procédé à corrélation croisée.

6. Procédé selon la revendication 1, **caractérisé en ce que** l'unité d'évaluation (23) effectue plusieurs fois la détermination de position relative pour une image enregistrée actuellement.

7. Procédé selon la revendication 1, **caractérisé en ce que** l'unité d'évaluation (23), à partir de la comparaison des données de l'image enregistrée actuellement pendant la production en cours de la machine à imprimer, avec des données issues de l'image générée précédemment, génère un ordre de commande destiné à un entraînement de réglage, pour régler une alimentation d'un liquide de mouillage.

8. Procédé selon la revendication 1, **caractérisé en ce que** le registre est un registre périphérique, un registre latéral ou un réglage en diagonale du cylindre de forme (06 ; 07 ; 08 ; 09) par rapport au cylindre de transfert (11 ; 12 ; 13 ; 14) lui étant associé.

9. Procédé selon la revendication 1, **caractérisé en ce que,** par son ordre de commande destiné à l'entraînement pour le réglage du registre, l'unité d'évaluation (23) commande ou règle une position de phase ou une position angulaire du cylindre de forme (06 ; 07 ; 08 ; 09).

10. Procédé selon la revendication 1, **caractérisé en ce que** l'unité d'évaluation (23) présente un raccordement (36) à un réseau de société.

11. Procédé selon la revendication 1, **caractérisé en ce que** l'unité d'évaluation (23) est en échange de données bidirectionnel avec une unité d'entrée et d'édition (33), l'unité d'entrée et d'édition (33) présentant, grâce à la possibilité d'entrées manuelles et/ou d'un déclenchement d'au moins un ordre de réglage, des possibilités de correction pour les ordres de réglage générés par l'unité d'évaluation (23).

12. Procédé selon la revendication 11, **caractérisé en ce que** l'unité d'entrée et d'édition (33) présente un moniteur pour l'affichage de l'image appréhendée.

13. Procédé selon la revendication 1, **caractérisé en ce que** l'unité d'entrée et d'édition (33) présente une mémoire (34) pour le stockage des séquences d'image appréhendées.

14. Procédé selon la revendication 1, **caractérisé en ce que** la machine à imprimer applique au moins une image d'impression sur le support d'image (21).

15. Procédé selon la revendication 1, **caractérisé en ce que** le réglage s'effectue simultanément, conjointement avec une inspection de l'image d'impression.

16. Procédé selon la revendication 1, **caractérisé en ce que** le capteur d'images (22) est disposé à la sortie du dernier groupe d'impression (04), en observant dans la direction de transport du support d'impression (21), de la machine à imprimer.

17. Procédé selon la revendication 1, **caractérisé en ce que** le capteur d'images (22) est disposé dans ou sur une sortie (28) de la machine à imprimer.

18. Procédé selon la revendication 1, **caractérisé en ce que** l'unité d'évaluation (23) effectue son contrôle d'une variation de la tonalité et/ou son contrôle du respect du registre, en continu, lorsque le processus d'impression est en cours.

19. Procédé selon la revendication 1, **caractérisé en ce que** l'unité d'évaluation (23) effectue son contrôle de la variation de la tonalité et/ou son contrôle du respect du registre, pour chaque exemplaire d'impression imprimé dans la machine à imprimer.

20. Procédé selon la revendication 1, **caractérisé en ce que** l'unité d'évaluation (23) classe les exemplaires d'impression contrôlés en groupes de différents niveaux de qualité.

21. Procédé selon la revendication 1, **caractérisé en ce que** l'unité d'évaluation (23) stocke des données pour un établissement de procès-verbal et une documentation, allant de pair avec cela, de la qualité des produits d'impression et/ou pour des analyses statistiques concernant le processus d'impression.

22. Procédé selon la revendication 1, **caractérisé en ce que,** pour un exemplaire d'impression dont l'écart de régulation dépasse une limite de tolérance admissible, l'unité d'évaluation (23) produit un ordre de réglage destiné à au moins un entraînement de réglage agissant sur au moins un dispositif de transport du support d'impression (21), de manière à exclure et/ou à identifier cet exemplaire d'impression.

23. Procédé selon la revendication 1, **caractérisé en ce que,** au moins dans un groupe d'impression (01 ; 02 ; 03 ; 04), est installé un capteur de rotation (32) pour la synchronisation de la fréquence, à laquelle la détection d'images s'effectue, avec la vitesse de transport du support d'impression (21).

24. Procédé selon la revendication 23, **caractérisé en ce que** le capteur de rotation (32) est installé dans le groupe d'impression (01 ; 02 ; 03 ; 04), dans ou sur lequel la détection des images est effectuée avec le capteur d'images (22).

25. Procédé selon la revendication 23, **caractérisé en ce que** le capteur de rotation (32) fournit son signal de sortie à l'unité d'évaluation (23) et/ou au capteur d'images (22).

26. Procédé selon la revendication 1, **caractérisé en ce que,** dans le cas d'une variation de la tonalité dépassant une limite de tolérance admissible, l'unité d'évaluation (23) modifie le dosage et/ou l'alimentation en encre dans la machine à imprimer, de manière que la variation de la tonalité soit minimale du fait d'une application d'encre répondant à l'image actuellement imprimée.

27. Procédé selon la revendication 1, **caractérisé en ce que** l'unité d'évaluation (23) règle au moins un registre réglable dans la machine à imprimer, de manière à obtenir une précision de registre aussi élevée que possible pour une image d'impression répondant à l'enregistrement de l'image évaluée.

28. Procédé selon la revendication 1, **caractérisé en ce qu'**un dispositif de traitement de données de l'étage d'impression préliminaire est relié à l'unité d'évaluation (23), le dispositif de traitement de données amenant à l'unité d'évaluation (23) les données de l'image générée préalablement.

29. Procédé selon la revendication 1, **caractérisé en ce que** la machine à imprimer présente plusieurs groupes d'impression (01 ; 02 ; 03 ; 04), sachant que, au moins dans l'un des groupes d'impression (01 ; 02 ; 03 ; 04) de la machine à imprimer, l'entraînement du cylindre de forme (06 ; 07 ; 08 ; 09), ou du cylindre de transfert (11 ; 12 ; 13 ; 14) associé à ce cylindre de forme (06 ; 07 ; 08 ; 09), est susceptible d'être commandé ou susceptible d'être réglé indépendamment de l'entraînement du cylindre de forme (06 ; 07 ; 08 ; 09), ou du cylindre de transfert (11 ; 12 ; 13 ; 14) associé à ce cylindre de forme (06 ; 07 ; 08 ; 09), dans un autre groupe d'impression (01 ; 02 ; 03 ; 04) de la machine à imprimer.

30. Procédé selon la revendication 29, **caractérisé en ce que** l'unité d'évaluation (23), avec l'ordre de réglage émis par elle, règle la position angulaire ou la position en phase mutuelle des cylindres de forme (06 ; 07 ; 08 ; 09) disposés dans différents groupes d'impression (01 ; 02 ; 03 ; 04) de la machine à imprimer, participant à l'impression de l'image d'impression, ou leurs cylindres de transfert (11 ; 12 ; 13; 14) associés, à un registre convenant pour la production de l'image d'impression.

31. Procédé selon la revendication 1, **caractérisé en ce que** l'entraînement du cylindre de forme (06 ; 07 ; 08 ; 09) est disposé coaxialement à l'axe du cylindre de forme (06 ; 07 ; 08 ; 09).

32. Procédé selon la revendication 1, **caractérisé en ce que** l'entraînement du cylindre de forme (06 ; 07 ; 08 ; 09) est relié rigidement à l'axe du cylindre de forme (06 ; 07 ; 08 ; 09).

33. Procédé selon la revendication 1, **caractérisé en ce que** la machine à imprimer présente plusieurs groupes d'impression (01 ; 02 ; 03 ; 04), les cylindres de contre-pression (16 ; 17 ; 18 ; 19) disposés dans différents groupes d'impression (01 ; 02 ; 03 ; 04) de la machine à imprimer étant reliés ensemble mécaniquement.

34. Procédé selon la revendication 33, **caractérisé en ce que** des cylindres de contre-pression (16 ; 17 ; 18 ; 19) disposés dans différents groupes d'impression (01 ; 02 ; 03 ; 04) de la machine à imprimer présentent un entraînement commun.

35. Procédé selon la revendication 33, **caractérisé en ce que** l'entraînement des cylindres de contre-pression (16 ; 17 ; 18 ; 19) est désaccouplé de l'entraînement des cylindres de forme (06 ; 07 ; 08 ; 09) ou des cylindres de transfert (11 ; 12 ; 13 ; 14).

36. Procédé selon la revendication 1, **caractérisé en ce que** le cylindre de forme (06 ; 07 ; 08 ; 09) et le cylindre de transfert (11 ; 12 ; 13 ; 14) lui étant associé présentent un entraînement commun.

37. Procédé selon la revendication 1, **caractérisé en ce que** l'unité d'évaluation (23) effectue une analyse de secteurs d'images d'impression appropriés, à partir de données issues de l'image générée précédemment.

38. Procédé selon la revendication 37, **caractérisé en ce que** des secteurs d'images d'impression appropriés sont des zones de l'image dans lesquelles l'encre d'impression à mesurer domine ou se rencontre exclusivement.

39. Procédé selon la revendication 37, **caractérisé en ce que** l'unité d'évaluation (23) détermine la position des différentes teintes de couleur à l'intérieur des secteurs d'images d'impression appropriés.

40. Procédé selon la revendication 1, **caractérisé en ce que** l'unité d'évaluation (23) convertit en au moins un ordre de réglage des différences de position, déterminées au moyen de la détermination de position relative, entre la séparation de couleur, effectuée à partir des données de l'image enregistrée actuellement, et la séparation de couleur de référence, effectuée à partir des données de l'image enregistrée antérieurement, dans la direction de transport du support d'impression (21) et/ou transversalement la direction de transport du support d'impression (21).

41. Procédé selon la revendication 1, **caractérisé en ce que** l'unité d'évaluation (23) évalue des secteurs d'images d'impression appropriés spécifique à une couleur spéciale, différant des couleurs standard (CMYK).

42. Procédé selon la revendication 37, **caractérisé en ce que** l'unité d'évaluation (23) stocke dans la mémoire (34) les secteurs d'images d'impression appropriés.

43. Procédé selon la revendication 42, **caractérisé en ce que** l'unité d'évaluation (23) règle en tant que position de consigne les secteurs d'images d'impression stockés dans la mémoire (34).
